# FASCICULE DE BREVET EUROPEEN

(11) **EP 0 581 678 B1**
(45) Date de publication et mention de la délivrance du brevet: **17.09.1997**
(21) Numéro de dépôt: 93401962.1
(22) Date de dépôt: 28.07.1993
(51) Int. Cl.: F16L 33/24, F16L 19/06, F16L 19/065

(54) **Tuyau muni d'un dispositif de serrage radial pour raccordement à une extrémité de tuyau; embout de raccordement comprenant ce tuyau**
Schlauch mit radialer Spannvorrichtung zum Verbinden mit einem Rohrende; Schlauchverbindung mit diesem Schlauch
Hose with radial clamping device for connecting to a pipe end; connector with said hose

(30) Priorité: 29.07.1992 FR 9209394
(43) Date de publication de la demande: 02.02.1994
(73) Titulaire: GRIPP S.A., F-38180 Seyssins (FR)
(72) Inventeur: Anessi, Jacques, F-38180 Seyssins (FR)
(74) Mandataire: Derambure, Christian

(56) Documents cités:
- EP-A- 0 178 230
- EP-A- 0 410 843
- DE-A- 3 631 547
- FR-A- 1 177 068
- FR-A- 1 185 621
- GB-A- 578 507
- US-A- 3 679 239

## Description

L'invention concerne un dispositif de serrage radial d'un tuyau.

La demande de brevet européen EP-A-0 410 843 décrit déjà un embout de raccordement pour tuyau de matière synthétique de type semi-rigide, qui comprend une bague biconique en forme de manchon cylindrique fermé. Dans cet embout, on peut réaliser un double serrage, c'est-à-dire un premier serrage résultant de l'introduction d'un tube interne à force dans le tuyau alors que la bague biconique a été préalablement placée et un deuxième serrage lorsque l'écrou flottant femelle de l'embout est raccordé à un embout mâle correspondant. Les avantages apportés par ce double serrage sont considérables et permettent en particulier la réalisation pratique d'embouts de raccordement démontables à moindre coût, de moindre encombrement et dont le diamètre de l'embout peut correspondre à celui du tuyau selon les normes en vigueur dites "pas du gaz" dans le domaine de la plomberie.

Néanmoins, on a constaté des variations de diamètre interne et externe sur les tuyaux eux-mêmes qui peuvent être relativement importantes et gêner l'utilisation d'un tel dispositif de serrage radial connu qui doit être dimensionné avec une grande précision, si l'on veut effectivement obtenir une facilité d'utilisation avec le double serrage susmentionné. En particulier, il est souhaitable simultanément que le tube interne puisse être vissé à l'intérieur du tuyau sans nécessiter un couple de serrage trop important tout en réalisant le premier serrage contre la bague biconique. De plus, lorsque les dimensions du tuyau ne sont pas parfaitement respectées, il est nécessaire d'induire un deuxième serrage beaucoup plus important pour obtenir l'étanchéité parfaite. Or, on a constaté que si l'on serre axialement l'embout femelle sur l'embout mâle selon une valeur plus importante, la bague biconique vient à se déformer en flambage axial, seules ses portions d'extrémités réalisant le serrage sur le tuyau, la partie médiane étant bombée. Dès lors, la bague biconique déchire le tuyau et ne réalise pas un serrage correct.

Par ailleurs, US-A-3 679 239, qui montre les caractéristiques du préambule de la revendication 1, décrit une rondelle de compression en caoutchouc définissant des faces de serrage circonférentielles et comportant une rondelle interne en acier fendue pourvue de bords tournés vers l'intérieur qui mordent la paroi de la portion extrême du tube plastique lorsque la rondelle de compression est serrée. Ce document ne décrit pas un dispositif de serrage à double serrage et ne fournit pas de solution aux problèmes mentionnés ci-dessus. Au contraire, la bague interne en acier de ce document est conçue pour déchirer le tuyau par ses portions d'extrémités.

L'invention vise donc à remédier à ces inconvénients et a pour objet de proposer un dispositif de serrage radial d'un tuyau, et un embout de raccordement, qui présentent les avantages décrits dans la demande de brevet européen EP-A-0 410 843, mais qui simultanément puissent être utilisés avec des tuyaux dont les caractéristiques dimensionnelles peuvent varier dans des plages de valeur plus importantes sans que les qualités du serrage ne soient affectées.

Plus particulièrement, l'invention vise à proposer un dispositif de serrage radial qui permette une amplitude de serrage plus importante, notamment lors du deuxième serrage, sans pour autant provoquer le flambage axial de la bague.

Egalement, l'invention vise à proposer un dispositif de serrage radial qui possède simultanément les avantages des bagues fendues (grande amplitude de serrage et facilité d'utilisation), avec les avantages des bague en forme de manchon cylindrique fermé (étanchéité, puissance de serrage plus importante, encombrement plus faible ...

Pour ce faire l'invention concerne un tuyau tel que défini à la revendication 1. La bague étant déformable radialement, on peut ainsi obtenir une gamme d'amplitudes de serrage plus importante, et la portée indéformable permet néanmoins de réaliser ledit premier serrage, notamment lors de l'introduction d'un tube interne à l'intérieur du tuyau ou simplement lors du vissage de la bague sur une extrémité libre de tuyau.

Avantageusement, la portée indéformable a un diamètre interne tel que le diamètre interne maximum de la bague déformable est inférieur - notamment légèrement inférieur - au diamètre externe du tuyau quand le collier est monté sur la bague. Dans le cas de l'utilisation d'un embout de raccordement comprenant un tube interne inséré à l'extrémité libre du tuyau, le diamètre interne de la portée indéformable cylindrique est tel que la différence entre le diamètre interne maximum de la bague déformable munie du collier et le diamètre externe du tube interne est inférieure au double de l'épaisseur du tuyau qui se trouve ainsi coincé entre la bague déformable et le tube interne. En particulier, le diamètre externe du tube interne est supérieur au diamètre interne du tuyau, notamment au diamètre interne du tuyau lorsque la bague déformable a été placée autour du tuyau.

Avantageusement, la longueur axiale de la portée indéformable est inférieure inférieure ou égale à la longueur axiale de la bague déformable moins la longueur axiale de chaque bord tronconique -.

Avantageusement, la bague déformable est biconique et la portée indéformable cylindrique s'étend axialement le long de la majeure partie de la portion cylindrique de la bague déformable s'étendant entre ses deux bords tronconiques.

Avantageusement, la bague déformable radialement est constituée notamment d'une bague métallique fendue selon une direction inclinée par rapport à son axe.

Avantageusement, le diamètre interne de la portée cylindrique indéformable est inférieur au diamètre externe de la portion cylindrique de la bague déformable élastique au repos. Ainsi, l'encombrement radial du dispositif selon l'invention est diminué. De plus, selon l'invention, la bague déformable comporte une gorge cylindrique périphérique de réception pour la portée cylindrique indéformable, le plus grand diamètre de la bague déformable - c'est-à-dire le plus grand diamètre de chaque bord tronconique de la bague déformable - étant supérieur au diamètre interne de la portée cylindrique indéformable. Le fond de la gorge cylindrique périphérique constitue ladite portion cylindrique de la bague déformable biconique entre ses deux bords tronconiques, la gorge s'étendant axialement entre les deux bords tronconiques.

Le collier est inséré et maintenu dans la gorge cylindrique périphérique de la bague déformable .

Selon l'invention, le diamètre externe du collier est du même ordre que le diamètre externe de la bague déformable élastique au repos.

Le tuyau selon l'invention peut donc être constitué d'une bague double constituée d'une première bague fendue, et d'un collier entourant cette bague fendue. La bague fendue venant en contact du tuyau peut-être pourvue d'un taraudage dont les filets sont arrondis et dont le diamètre peut être décroissant sur toute la longueur de la bague en vue d'améliorer l'efficacité du premier serrage. Une telle bague double est d'un encombrement radial réduit et permet néanmoins une gamme d'amplitudes de serrage importante.

L'invention concerne également un embout de raccordement pour un tuyau - notamment un tuyau de matière synthétique, et plus particulièrement un tuyau de matière semi-rigide tel que le PVC réticulé -, caractérisé en ce qu'il comporte un tuyau selon l'invention.

Par ailleurs, un embout selon l'invention est caractérisé en ce qu'il comporte au moins une rondelle interposée entre au moins l'une des portées tronconiques et le bord tronconique correspondant de la bague déformable. Plus particulièrement, l'embout selon l'invention comporte un écrou rotatif comprenant un taraudage femelle et s'engageant à l'extérieur du tuyau en chevauchant la bague biconique pour la serrer axialement contre une pièce à collet lors du serrage de l'écrou sur un embout mâle correspondant, l'écrou et la pièce à collet étant chacun pourvu d'une portée tronconique destinée à coopérer avec les bords tronconiques de la bague. L'embout est caractérisé en ce que la rondelle est insérée dans une gorge de l'écrou et/ou de la pièce à collet. La rondelle selon l'invention peut-être montée libre en rotation par rapport à l'écrou et /ou par rapport à la pièce à collet, et peut-être constituée d'une matière favorisant le glissement notamment un polymère fluorocarboné -.

La présence de la rondelle de glissement favorise le serrage de l'écrou femelle sur l'embout mâle et donc permet une augmentation du serrage axial, donc du serrage radial de la bague sur le tuyau.

D'autres avantages de l'invention apparaîtront à la lecture de la description suivante qui se réfère aux figures annexées dans lesquelles :

La figure 1 est une vue en coupe axiale d'un embout de raccordement selon un premier mode de réalisation préférentiel de l'invention.

La figure 2 est une vue en perspective d'un collier réalisant la portée cylindrique d'un dispositif de serrage radial selon le mode de réalisation représenté à la figure 1.

La figure 3 est une vue en perspective d'une bague déformable d'un dispositif de serrage axial selon le mode de réalisation représenté à la figure 1.

La figure 4 est une vue de profil perpendiculairement à l'axe d'un dispositif de serrage axial selon le mode de réalisation de la figure 1, le collier étant monté sur la bague déformable.

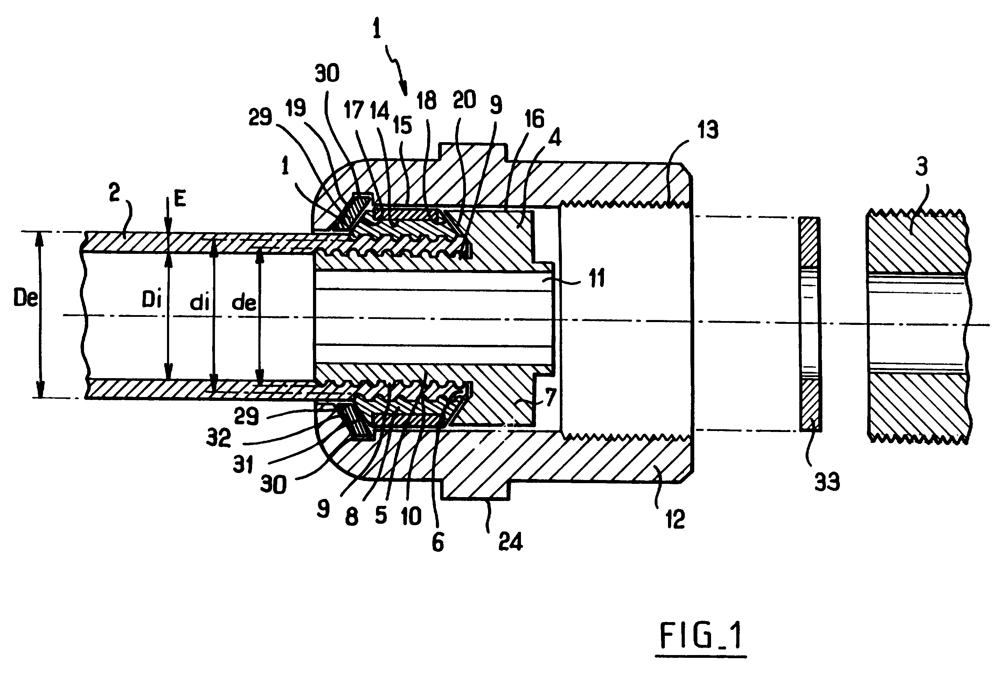

L'embout 1 de raccordement représenté à la figure 1 est du type déjà décrit dans la demande de brevet européen EP-A- 0 410 843 de la Demanderesse.

Cet embout 1 de raccordement est destiné à être monté sur un tuyau 2 de matière synthétique tel que le PVC réticulé ou autre, d'épaisseur E, de diamètre intérieur Di, de diamètre extérieur De. L'embout 1 permet le raccordement du tuyau 2 sur un embout 3 mâle et comporte une pièce à collet 4 formant un tube interne 5 introduit à l'extrémité 6 du tuyau 2. La pièce à collet 4 forme un collet 7 qui définit une portée tronconique 20. Le tube interne 5 est pourvu d'un filetage extérieur 9.

L'embout 1 comporte également un dispositif de serrage radial 8 comprenant une bague 8a pourvue d'un taraudage intérieur 10, et la pièce à collet 4 comporte des moyens 11 de coopération avec un outil de vissage en vue de réaliser le premier serrage du dispositif de serrage radial 8 sur le tuyau 2.

L'embout 1 de raccordement comporte un écrou rotatif 12 muni d'un taraudage femelle 13 chevauchant le dispositif 8 de serrage radial, et la pièce à collet 4 est pourvue d'une portée inclinée tronconique 19. L'écrou 12 est monté flottant à l'extérieur du tuyau 2.

Le dispositif 8 de serrage radial du tuyau 2 comporte une bague 8a comprenant au moins un bord tronconique 17, 18 destiné à coopérer avec une portée tronconique 19, 20 de moyens 12, 7 de serrage axial pour engendrer le serrage radial de la bague 8a sur le tuyau 2 sous l'effet du serrage axial. Les moyens 12, 7 de serrage axial sont constitués de l'écrou 12 qui est vissé sur l'embout mâle 3, et du collet 7 de la pièce à collet 4, le dispositif 8 de serrage radial étant coincé axialement entre cet écrou 12 et le collet 7. L'écrou 12 est muni de pans 24 de vissage sur sa surface extérieure.

La bague 8a du dispositif 8 de serrage radial est déformable radialement et le dispositif 8 comporte une portée 14 indéformable entourant la bague 8a déformable pour limiter la déformation de son diamètre interne di à une valeur maximum di max.

La portée 14 indéformable est cylindrique de révolution et son diamètre dp est tel que le diamètre interne maximum di max de la bague 8a déformable est inférieur au diamètre externe De du tuyau. Le diamètre interne maximum di max de bague 8a déformable s'entend du diamètre pris à l'extrémité des filets du taraudage 10. Pour permettre l'association de la bague 8a déformable à l'extrémité 6 du tuyau 2, le diamètre dp de la portée 14 indéformable est tel que le diamètre des fonds de filets du taraudage 10 est légèrement supérieur ou du même ordre que le diamètre extérieur De du tuyau 2 au moins à l'extrémité correspondante de la bague 8a. Ainsi, la différence entre le diamètre interne maximum di max de la bague 8a déformable et le diamètre extérieur De du tuyau 2 est inférieure ou égale à la hauteur des filets du taraudage 10 à l'extrémité correspondante de la bague 8a déformable. Ainsi, le diamètre intérieur maximum di max n'est que légèrement inférieur au diamètre extérieur De du tuyau 2.

Le diamètre dp de la portée 14 indéformable est tel que la différence di max - de entre le diamètre interne maximum de la bague 8a déformable et le diamètre externe de du tube interne 5 est inférieure au double de l'épaisseur E du tuyau 2. De la sorte, le tuyau 2 est serré entre le taraudage 10 de la bague 8a déformable et le tube interne 5, dans le cas des modes de réalisation représentés sur les figures ou un tel tube interne 5 est prévu. Par ailleurs, en variante ou en combinaison, le diamètre externe de du tube interne 5 est supérieur au diamètre interne Di du tuyau 2, notamment légèrement supérieur à ce diamètre interne Di. Là encore, le diamètre externe de du tube interne 5 s'entend du diamètre pris à l'extrémité des filets du filetage 9 de ce tube interne 5, et la différence entre le diamètre externe de et le diamètre interne Di du tuyau 2 est inférieure ou égale à la hauteur des filets, c'est-à-dire que le diamètre du tube interne 5 pris en fond de filets est du même ordre que ou inférieur au diamètre interne Di du tuyau 2.

La portée 14 indéformable est montée dans le premier mode de réalisation préférentiel représenté sur les figures 1 à 4 sur la bague 8a déformable.

La bague 8a déformable est biconique et comporte une portion 21 cylindrique s'étendant entre ses deux bords 17, 18 tronconiques. De plus, la bague 8a déformable est constituée d'une bague élastique fendue, notamment d'une bague métallique fendue selon une direction inclinée par rapport à son axe. De la sorte, le diamètre interne di de la bague 8a déformable peut varier entre une valeur minimale atteinte lorsque la bague 8a déformable est serrée jusqu'à ce que les deux bords 22a, 22b de la fente 23 viennent en contact l'un de l'autre, à une valeur maximum où les deux bords 22a, 22b de la fente 23 sont écartés. Le diamètre interne dp de la portée 14 cylindrique indéformable est inférieur ou égal au diamètre externe dg de la portion 21 cylindrique de la bague 8a déformable élastique au repos, avant montage de la portée 14 cylindrique sur la bague 8a déformable. De la sorte, lorsque la portion 21 cylindrique de la bague 8a déformable vient au contact de la portée 14 cylindrique indéformable, cette bague 8a déformable élastique est soit légèrement en compression contre la portée 14 cylindrique indéformable soit au repos, aucun jeu n'étant prévu entre la portée 14 cylindrique indéformable et la portion 21 cylindrique de la bague 8a déformable. Par ailleurs, le plus grand diamètre de la bague 8a déformable est supérieur au diamètre interne dp de la portée 14 cylindrique indéformable, et une gorge 25 cylindrique périphérique de réception pour la portée 14 cylindrique indéformable est prévue entre les deux bords tronconiques 17, 18 de la bague 8a déformable.

La portée 14 cylindrique indéformable est constituée de la surface interne 14 cylindrique d'un collier 8b en forme de manchon cylindrique métallique fermé placé dans la gorge 25 autour de la bague 8a déformable. La longueur axiale du collier 8b correspond donc à la longueur axiale de la gorge 25 et le collier 8b est inséré et maintenu dans la gorge 25 cylindrique périphérique de la bague 8a déformable. Par ailleurs, selon l'invention, la longueur axiale de la portée 14 indéformable est inférieure à la longueur axiale de la bague 8a déformable - notamment inférieure ou égale à la longueur axiale de la bague 8a déformable moins la longueur axiale de chaque bord tronconique 17, 18 de cette bague 8a déformable -. Plus précisément, la portée 14 cylindrique indéformable s'étend axialement le long de la majeure partie de la portion 21 cylindrique de la bague 8a déformable qui s'étend entre ses deux bords 17, 18 tronconiques. Ainsi, dans le mode de réalisation représenté, et selon l'invention, la portée 14 cylindrique indéformable s'étend en regard d'une portion cylindrique de la bague 8a déformable qui est constituée de la portion cylindrique de cette bague 8a déformable qui s'étend entre les deux bords tronconiques 17, 18 et qui forment le fond de la gorge 25 qui s'étend entre les deux bords tronconiques 17, 18.

Selon l'invention, le plus grand diamètre db de chaque bord tronconique 17, 18 de la bague 8a déformable est supérieur au diamètre interne dp de la portée 14 cylindrique indéformable. La différence entre le plus grand diamètre db de chaque bord tronconique 17, 18 et le diamètre dg de la portion cylindrique 21 formant le fond de la gorge 25 correspond à la hauteur de la gorge 25 et est du même ordre que l'épaisseur du collier 8b. Le diamètre externe dc du collier 8b est du même ordre que le diamètre externe dg de la portion 21 cylindrique de la bague 8a déformable élastique au repos. On peut néanmoins prévoir un certain jeu entre le diamètre dp de la portée 14 cylindrique indéformable du collier 8b et le diamètre dg de la portion 21 formant le fond de la gorge 25 de la bague 8a déformable, de sorte que le diamètre le plus grand des bords tronconiques 17, 18 soit légèrement supérieur au diamètre extérieur dc du collier après que la bague 8a déformable ait été placée sur le tuyau 2. De la sorte, après le deuxième serrage, c'est-à-dire après le serrage axial de l'embout 1 sur l'embout mâle 3, le plus grand diamètre des bords tronconiques 17, 18 est ramené à une position affleurante ou légèrement plus faible que le diamètre extérieur dc du collier 8b. Et la surface extérieure 26 du collier 8b vient alors en prolongement quasiment continûment de la surface extérieure 27, 28 de chaque bord tronconique 17, 18 et de la surface extérieure cylindrique 16 du collet 7, l'écrou 12 comportant un alésage cylindrique 15 qui chevauche et vient en regard de ces surfaces extérieures 26, 27, 28, au jeu de rotation près.

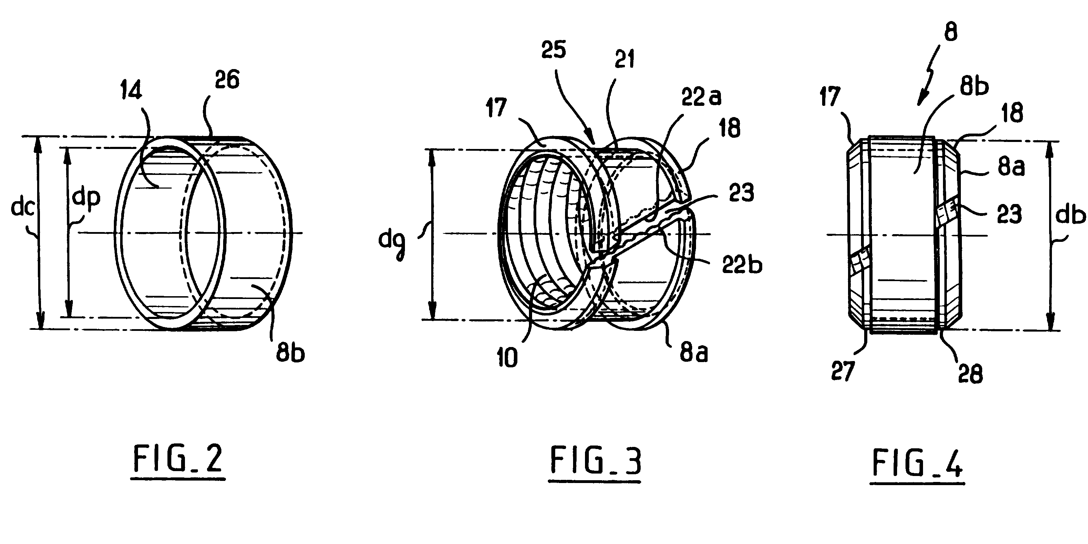

Par ailleurs, pour permettre le montage du collier 8b sur la bague 8a déformable fendue, la largeur de la fente 23 est déterminée pour que la valeur minimum prise par le plus grand diamètre db des bords tronconiques 17, 18 lorsque les deux bords 22a, 22b de la fente 23 sont dans leur position en contact l'un de l'autre, soit inférieure ou égale au diamètre dp de la portée 14 cylindrique indéformable constituée par la surface intérieure du collier 8b. Pour monter le collier 8b, il suffit donc de comprimer la bague 8a déformable et d'insérer ce collier 8b par un des bords tronconiques 17, 18 jusqu'à sa mise en place à l'intérieur de la gorge 25 comme représenté à la figure 4.

L'embout 1 de raccordement représenté sur la figure 1 comporte en outre au moins une rondelle 29 interposée entre au moins l'une des portées tronconiques 19, 20 et le bord tronconique 17, 18 de la bague 8a déformable correspondante. Dans le mode de réalisation représenté à la figure 1, de préférence et selon l'invention, on a prévu une seule rondelle 29 interposée entre la portée tronconique 19 de l'écrou 12 et le bord tronconique 17 en regard de la bague 8a déformable.

La rondelle 29 est insérée dans une gorge 30 de l'écrou 12 et/ou de la pièce à collet 4. La forme et les dimensions relatives de la rondelle 29 et de la gorge 30 sont déterminées pour que la rondelle 29 soit montée libre en rotation par rapport à l'écrou 12 et/ou par rapport à la pièce à collet 4. Cette rondelle 29 peut être constituée d'une matière favorisant le glissement telle qu'un polymère fluorocarboné. De préférence, la rondelle 29 forme elle-même une portée tronconique 31 qui vient au contact du bord tronconique 17 et/ou 18 de la bague 8a déformable. Egalement la rondelle 29 comporte une portée tronconique 32 qui vient au contact de la portée tronconique 19 et/ou 20 de l'écrou 12 et/ou de la pièce à collet 4. La rondelle 29 est engagée à force dans la gorge 30 qui forme des moyens de retenue pour cette rondelle 29.

Un joint 33 est par ailleurs interposé entre la pièce à collet 4 et l'embout mâle 3. Ce joint peut être au moins pour partie constitué d'un joint en polymère fluorocarboné facilitant la rotation de l'écrou 12 et/ou peut être associé solidaire de la pièce à collet 4, par exemple par soudure, collage ou vulcanisation de façon à éviter son fluage au contact de l'écrou 12 lors du serrage.

D'autres variantes de l'invention sont possibles, et notamment on peut prévoir que le collier 8b ne s'étende que sur une portion seulement de la longueur axiale de la portion 21 cylindrique de la bague 8a. Un dispositif 8 de serrage radial selon l'invention est également applicable à d'autres type d'embouts 1 que ceux décrits et représentés sur les figures, par exemple dans le cas où aucun tube interne n'est prévu ou lorsque la bague 8a déformable n'est pas biconique. En effet, ce dispositif 8 de serrage radial dans le mode de réalisation représenté constitue une double bague qui peut présenter de nombreux avantages compte tenu de ses possibilités importantes de serrage avec un encombrement radial limité en tout état de cause.

Enfin, la présence du collier 8b entourant la bague 8a déformable a également pour fonction d'empêcher tout flambage axial de cette bague lors du serrage axial en imposant un serrage continu sur toute la surface du taraudage interne de la bague 8a déformable.

L'invention permet ainsi de réaliser des serrages axiaux et radiaux de valeur extrêmement importante et en particulier deux serrages successifs de nature différente : un premier serrage au montage de la bague 8a déformable sur le tuyau 2, et un deuxième serrage lors de l'association de l'embout femelle à l'embout mâle. L'étanchéité de l'ensemble du raccord démontable ainsi réalisé est ainsi grandement améliorée par rapport à l'état de la technique.

## Revendications

1. Tuyau muni d'un dispositif de serrage radial comportant une bague (8a) fendue élastique comprenant au moins un bord tronconique (17, 18) destiné à coopérer avec une portée tronconique (19, 20) de moyens (12, 7) de serrage axial pour engendrer le serrage radial de la bague (8a) sur le tuyau sous l'effet du serrage axial, caractérisé en ce qu'il comporte un collier (8b) dont la surface interne (14) cylindrique constitue une portée (14) indéformable entourant la bague (8a) déformable pour limiter la déformation de son diamètre interne (di) à une valeur maximum (di max), la bague (8a) comportant un gorge (25) cylindrique périphérique de réception pour la portée (14) indéformable cylindrique, le plus grand diamètre (db) de chaque bord tronconique (17, 18) de la bague (8a) étant supérieur au diamètre interne (dp) de la portée (14), le diamètre externe (dc) du collier (8b) étant du même ordre que le diamètre externe (dg) d'une portion cylindrique (21) formant le fond de la gorge (25) de la bague (8a) élastique au repos.

2. Tuyau selon la revendication 1 caractérisé en ce que le diamètre interne (dp) de la portée (14) est tel que le diamètre interne maximum (di max) de la bague (8a) déformable est inférieur au diamètre externe (de) du tuyau quand le collier est monté sur la bague.

3. Tuyau selon l'une quelconque des revendications 1 et 2 comportant un tube interne (5) de diamètre extérieur (de) inséré à une de ses extrémités, caractérisé en ce que le diamètre interne (dp) de la portée (14) est tel que la différence (di max - de) entre le diamètre interne maximum de la bague (8a) déformable munie du collier et le diamètre externe (de) du tube interne (5) est inférieure au double de l'épaisseur (E) du tuyau.

4. Tuyau selon la revendication 3, caractérisé en ce que le diamètre externe (de) du tube interne (5) est supérieur au diamètre interne (di) du tuyau.

5. Tuyau selon l'une quelconque des revendications 1 à 4, caractérisé en ce que la longueur axiale de la portée (14) est inférieure ou égale à la longueur axiale de la bague (8a) déformable moins la longueur axiale de chaque bord tronconique (17, 18).

6. Tuyau selon l'une quelconque des revendications 1 à 5, caractérisé en ce que la bague (8a) déformable est biconique et en ce que la portée (14) s'étend axialement le long de la majeure partie de la portion (21) cylindrique de la bague (8a) déformable s'étendant entre ses deux bords (17, 18) tronconiques.

7. Tuyau selon l'une quelconque des revendications 1 à 6, caractérisé en ce que le fond (21) de la gorge (25) cylindrique périphérique constitue la portion cylindrique de la bague (8a) déformable biconique entre ses deux bords tronconiques (17, 18), la gorge (25) s'étendant entre les deux bords tronconiques (17, 18).

8. Embout de raccordement pour un tuyau, notamment un tuyau de matière synthétique caractérisé en ce qu'il comporte un tuyau muni d'un dispositif (8) de serrage radial selon l'une quelconque des revendications 1 à 7.

9. Embout selon la revendication 8, caractérisé en ce qu'il comporte au moins une rondelle (29) interposée entre au moins l'une des portées tronconiques (19, 20) et le bord tronconique (17, 18) de la bague (8a) déformable correspondant.

10. Embout selon la revendication 9, comprenant un écrou rotatif (12) comportant un taraudage femelle (13) et s'engageant à l'extérieur du tuyau en chevauchant la bague (8a) biconique pour la serrer axialement contre une pièce à collet (4) lors du serrage de l'écrou (12) sur un embout mâle correspondant, l'écrou (12) et la pièce à collet (4) étant chacun pourvus d'une portée tronconique (19, 20) destinée à coopérer avec les bords tronconiques (17, 18) de la bague (8a) déformable, caractérisé en ce que la rondelle (29) est insérée dans une gorge (30) de l'écrou (12) et/ou de la pièce à collet (4).

11. Embout selon la revendication 9 ou 10, caractérisé en ce que la rondelle (29) est montée libre en rotation par rapport à l'écrou (12) et/ou par rapport à la pièce à collet (4).

12. Embout selon l'une quelconque des revendications 9 à 11, caractérisé en ce que la rondelle (29) est constituée d'une matière favorisant le glissement, notamment un polymère fluorocarboné.

## Patentansprüche

1. Rohr mit einer radialen Klemmvorrichtung mit einem federnden Spaltring (8a), bestehend aus mindestens einem kegelstumpfartigen Rand (17, 18), der mit einer kegelstumpfartigen Auflagefläche (19, 20) von axialen Klemmitteln (12, 7) zusammenwirken soll, um das radiale Aufklemmen des Rings (8a) auf das Rohr unter der Wirkung der axialen Klemmung zu erzeugen, dadurch gekennzeichnet, dass es eine Schelle (8b) umfasst, deren zylindrische Innenfläche (14) eine unverformbare Auflagefläche (14) bildet, die den verformbaren Ring (8a) umgibt, um die Verformung seines Innendurchmessers (di) auf einen maximalen Wert (di max) zu begrenzen, wobei der Ring (8a) einen zylinderförmiqen, peripherischen Aufnahmehals (25) für die zylindrische, unverformbare Auflagefläche (14) aufweist, wobei der grösste Durchmesser (db) jedes kegelstumpfartigen Rands (17, 18) des Rings (8a) grösser als der Innendurchmesser (dp) der Auflagefläche (14) ist, während der Aussendurchmesser (dc) der Schelle (8b) die gleiche Grössenordnung wie der Aussendurchmesser (dg) eines zylindrischen Abschnitts (21) aufweist, der den Boden des Halses (25) des Federrings (8a) in Ruhestellung bildet.

2. Rohr nach Anspruch 1, dadurch gekennzeichnet, dass der Innendurchmesser (dp) der Auflagefläche (14) so beschaffen ist, dass der maximale Innendurchmesser (di max) des verformbaren Rings (8a) kleiner als der Aussendurchmesser (de) des Rohrs ist, wenn die Schelle auf dem Ring montiert ist.

3. Rohr nach einem der Ansprüche 1 und 2, mit einem in eine seiner Enden eingefügten Innenrohr (5), von Aussendurchmesser (de), dadurch gekennzeichnet, dass der Innendurchmesser (dp) der Auflagefläche (14) so beschaffen ist, dass die Differenz (di max - de) zwischen dem maximalen Innendurchmesser des verformbaren, mit der Schelle ausgerüsteten Rings (8a) und dem Aussendurchmesser (de) des Innenrohrs (5) kleiner ist als die doppelte Dicke (E) des Rohrs.

4. Rohr nach Anspruch 3, dadurch gekennzeichnet, dass der Aussendurchmesser (de) des Innenrohrs (5) grösser als der Innendurchmesser (di) des Rohrs ist .

5. Rohr nach einem der Ansprüche 1 bis 4, dadurch gekennzeichnet, dass die axiale Länge der Auflagefläche (14) kleiner oder gleich der axialen Länge des verformbaren Rings (8a) ist, abzüglich der axialen Länge jedes kegelstumpfartigen Rands (17, 18).

6. Rohr nach einem der Ansprüche 1 bis 5, dadurch gekennzeichnet, dass der verformbare Ring (8a) doppelkonisch ist, und dass sich die Auflagefläche (14) axial entlang des grössten Teils des zylindrischen, sich zwischen den beiden kegelstumpfartigen Rändern (17, 18) erstreckenden Abschnitts (21) des verformbaren Rings (8a) erstreckt.

7. Rohr nach einem der Ansprüche 1 bis 6, dadurch gekennzeichnet, dass der Boden (21) des zylindrischen, peripherischen Halses (25) den zylindrischen Abschnitt des verformbaren, doppelkonischen Rings (8a) zwischen seinen beiden kegelstumpfartigen Rändern (17, 18) bildet, wobei sich der Hals (25) zwischen den beiden kegelstumpfartigen Rändern (17, 18) erstreckt.

8. Anschlusstutzen für ein Rohr, insbesondere ein Rohr aus Kunststoff, dadurch gekennzeichnet, dass er ein mit einer radialen Klemmvorrichtung (8) nach einem der Ansprüche 1 bis 7 ausgerüstetes Rohr umfasst.

9. Stutzen nach Anspruch 8, dadurch gekennzeichnet, dass er mindestens eine Scheibe (29) umfasst, die zwischen mindestens einer der kegelstumpfartigen Auflageflächen (19, 20) und dem kegelstumpfartigen Rand (17, 18) des entsprechenden verformbaren Rings (8a) angeordnet ist.

10. Stutzen nach Anspruch 9, dadurch gekennzeichnet, dass er eine Drehmutter (12) mit Innengewinde (13) umfasst, die auf das Rohr aufgesteckt wird und dabei den doppelkonischen Ring (8a) übergreift, um ihn axial gegen ein Kragenteil (4) zu klemmen, wenn die Mutter (12) auf einen entsprechenden Stutzen mit Aussengewinde aufgeschraubt wird, wobei die Mutter (12) und das Kragenteil (4) jeweils eine kegelstumpfartige Auflagefläche (19, 20) aufweisen, die mit den kegelstumpfartigen Rändern (17, 18) des verformbaren Rings (8a) zusammenwirken sollen, dadurch gekennzeichnet, dass die Scheibe (29) in einen Hals (30) der Mutter (12) und/oder des Kragenteils (4) eingefügt ist.

11. Stutzen nach Anspruch 9 oder 10, dadurch gekennzeichnet, dass die Scheibe (29) rotationsfrei in Bezug auf die Mutter (12) und/oder in Bezug auf das Kragenteil (4) montiert ist.

12. Stutzen nach einem der Ansprüche 9 bis 11, dadurch gekennzeichnet, dass die Scheibe (29) aus einem das Gleiten fördernden Werkstoff besteht, insbesondere einem Fluorkohlenstoffpolymer.

## Claims

1. A pipe equipped with a radial clamping device including a split elastic ring (8a) comprising at least one tapered edge (17, 18) intended to cooperate with a tapered bearing surface (19, 20) of axial clamping means (12, 7) to produce the radial clamping of the ring (8a) on the pipe under the effect of the axial clamping, characterised in that it includes a collar (8b) whose cylindrical inner surface (14) makes up a non deformable bearing surface (14) surrounding the deformable ring (8a) so as to limit the deformation of its inside diameter (di) to a maximum value (di max), the ring (8a) including a peripheral cylindrical groove (25) for receiving the cylindrical non deformable bearing surface (14), the larger diameter (db) of each tapered edge (17, 18) of the ring (8a) being greater than the inside diameter (dp) of the bearing surface (14), the outside diameter (dc) of the collar (8b) being approximately equal to the outside diameter (dg) of a cylindrical portion (21) forming the bottom of the groove (25) of the elastic ring (8a) at rest.

2. A pipe according to claim 1, characterised in that the inside diameter (dp) of the bearing surface (14) is such that the maximum inside diameter (di max) of the deformable ring (8a) is smaller than the outside diameter (de) of the pipe when the collar (8b) is fitted on the ring (8a).

3. A pipe according to any of claims 1 and 2 including an inner pipe (5) with an outside diameter (de) inserted at one of its ends, characterised in that the inside diameter (dp) of the bearing surface (14) is such that the difference (di max - de) between the maximum inside diameter of the deformable ring (8a) equipped with the collar (8b) and the outside diameter (de) of the inner pipe (5) is less than twice the thickness (E) of the pipe.

4. A pipe according to claim 3, characterised in that the outside diameter (de) of the inner pipe (5) is greater than the inside diameter (di) of the pipe.

5. A pipe according to any of claims 1 to 4, characterised in that the axial length of the bearing surface (14) is less than or equal to the axial length of the deformable ring (8a) minus the axial length of each tapered edge (17, 18).

6. A pipe according to any of claims 1 to 5, characterised in that the deformable ring (8a) is biconical and in that the bearing surface (14) extends axially along a significant part of the cylindrical portion (21) of the deformable ring (8a) extending between its two tapered edges (17, 18).

7. A pipe according to any of claims 1 to 6, characterised in that the bottom (21) of the peripheral cylindrical groove (25) makes up the cylindrical portion of the biconical deformable ring (8a) between its two tapered edges (17, 18), the groove (25) extending between the two tapered edges (17, 18).

8. A connecting socket for a pipe, particularly a pipe made of synthetic material, characterised in that it includes a pipe equipped with a radial clamping device (8) according to any of claims 1 to 7.

9. A socket according to claim 8, characterised in that it includes at least one washer (29) inserted between at least one of the tapered bearing surfaces (19, 20) and the corresponding tapered edge (17, 18) of the deformable ring (8a).

10. A socket according to claim 9, comprising a turning nut (12) including a female thread (13) and fitted on the exterior of the pipe, overlapping the biconical ring (8a) so as clamp it axially against a flanged piece (4) when the nut (12) is fastened onto a corresponding male socket, the nut (12) and the flanged piece (4) each disposing of a tapered bearing surface (19, 20) intended to cooperate with the tapered edges (17, 18) of the deformable ring (8a), characterised in that the washer (29) is inserted in a groove (30) of the nut (12) and/or of the flanged piece (4).

11. A socket according to claim 9 or 10, characterised in that the washer (29) is fitted freely rotating with respect to the nut (12) and/or with respect to the flanged piece (4).

12. A socket according to any of claims 9 to 11, characterised in that the washer (29) consists of a material favouring sliding, particularly a fluorocarbon polymer.
